# EUROPÄISCHE PATENTANMELDUNG

(11) **EP 1 154 246 A2**
(43) Veröffentlichungstag der Anmeldung: **14.11.2001**
(21) Anmeldenummer: 01110683.8
(22) Anmeldetag: 02.05.2001
(51) Int. Cl.: G01F 23/292, G01F 23/68

(54) **Füllstandsanzeige mit Lichtquelle**

(30) Priorität: 09.05.2000 DE 10022591
(71) Anmelder: BSH Bosch und Siemens Hausgeräte GmbH, 81669 München (DE)
(72) Erfinder: Zinsberger, Alfons, 83410 Laufen (DE); Eggersdorfer, Hermann, 83308 Trostberg (DE); Beutlrock, Maximilian, 83361 Kienberg (DE); Steiner, Gerhard, 83228 Traunstein (DE)

(57) **Zusammenfassung**

Füllstandsanzeige für ein Medium, insbesondere Flüssigkeit mit einem lichtdurchlässigen Anzeigemittel, wobei das Anzeigemittel in der Weise beschaffen ist, daß das Anzeigemittel in Abhängigkeit davon, welches Medium an das Anzeigemittel angrenzt unterschiedliche optische Eigenschaften aufweist, so daß im Grenzbereich zwischen zwei Medien ein optischer Effekt auftritt, der den Füllstand eines Mediums anzeigt. Zur Unterstützung des optischen Effektes ist eine Lichtquelle vorgesehen, die optisch an das Anzeigemittel angekoppelt ist.

## Beschreibung

Die Erfindung betrifft eine Füllstandsanzeige, gemäß dem Oberbegriff des Anspruchs 1.

Füllstandsanzeigen werden beispielsweise bei Wasserkochern oder Kaffeemaschinen eingesetzt, um über eine optische Kontrolle den Füllstand eines Flüssigkeitsbehälters kontrollieren zu können.

Aus der DE-OS 20 38 850 ist ein Abdeckglas für einen Flüssigkeitsstandanzeiger bekannt, der in Form eines durchleuchtbaren Schauglases zur Beobachtung einer Füllhöhe eines Behälters ausgebildet ist. Der Flüssigkeitsstandanzeiger ist als Reflexionsanzeiger ausgebildet, der auf der dem zu messenden Medium zugewandten Seite Rillen aufweist. Im dampf- bzw. im gasgefülltem Bereich des Schauglases wird das einfallende Licht an den Rillen reflektiert. Die Rillen erscheinen daher in diesem Bereich silbrig oder weiß. Im flüssigkeitsgefüllten Bereich dagegen wird das einfallende Licht infolge des gegenüber der Dampfphase höheren Brechungsindizes der Flüssigkeit in den Flüssigkeitsraum hineingebrochen und dort teilweise absorbiert. Dieser Bereich erscheint dunkel. Auf diese Weise ist die Grenzfläche zwischen Flüssigkeit und Dampf relativ gut erkennbar.

Die Aufgabe der Erfindung besteht darin, die Erkennbarkeit der Grenzfläche zwischen einem ersten und einem zweiten Medium bei einer Füllstandsanzeige zu verbessern.

Die Aufgabe der Erfindung wird durch die Merkmale des Anspruchs 1 gelöst. Ein Vorteil der Erfindung besteht darin, daß zur Verbesserung der Erkennbarkeit der Grenzfläche eine Lichtquelle vorgesehen ist, die das Anzeigemittel zusätzlich zu dem natürlichen Licht mit Licht versorgt. Auf diese Weise wird der optische Effekt, der an der Grenzfläche auftritt, verstärkt.

Weitere vorteilhafte Ausführungen der Erfindung sind in den abhängigen Ansprüchen angegeben. Eine vorteilhafte Ausführungsform der Erfindung wird mit einem Anzeigemittel erreicht, das in Form eines Rohres mit einem Innenkanal ausgebildet ist. Die Lichtquelle ist in dieser Ausführungsform an den Innenkanal angekoppelt. Durch das Rohr wird die von der Lichtquelle eingebrachte Lichtenergie im Innenkanal geführt, so daß an der Grenzfläche eine hohe Lichtenergie zur Verfügung steht, die den optischen Effekt verstärkt.

Eine weitere Verstärkung des optischen Effektes wird vorzugsweise durch Verwendung eines Schwimmkörpers erreicht, der im Innenkanal angeordnet ist. Der Schwimmkörper wird von der Lichtquelle angeleuchtet und ist deutlich als Grenzfläche erkennbar.

Eine bevorzugte Ausführungsform des Schwimmkörpers besteht darin, den Schwimmkörper auf der Ober- bzw. Unterseite lichtdurchlässig auszubilden, wobei der Schwimmkörper zusätzlich in der Weise aufgebaut ist, daß von der Ober- oder Unterseite aufgenommenes Licht seitlich nach Außen abgegeben wird. Auf diese Weise wird das von der Lichtquelle abgegebene Licht seitlich in Richtung auf einen Beobachter reflektiert.

In einer weiteren bevorzugten Ausführungsform des Schwimmkörpers ist der Schwimmkörper mindestens teilweise aus einem lichtsammelnden Material aufgebaut. Damit stellt der Schwimmkörper eine Grenzfläche für das von der Lichtquelle ausgesendete Licht dar, so daß der Lichtstrahl im Innenkanal abrupt am Schwimmkörper endet und deshalb deutlich als Grenzfläche erkennbar ist.

Eine weitere bevorzugte Ausführungsform besteht in der Verwendung eines Lichtleiters, dessen Außenfläche in der Weise aufgebaut ist, das ein unterschiedlicher Brechungsindex im Übergang zwischen Flüssigkeit und Luft besteht. Auf diese Weise wird das im Lichtleiter geführte Licht in dem Bereich, in dem Flüssigkeit am Lichtleiter anliegt, anders nach Außen reflektiert als in dem Bereich, in dem keine Flüssigkeit anliegt. Somit ist die Grenzfläche zwischen Flüssigkeit und Luft deutlich erkennbar.

Eine bevorzugte Ausführungsform des Lichtleiters besteht darin, die Oberfläche des Lichtleiters mit einer Beschichtung zu versehen, die in Abhängigkeit davon ob Flüssigkeit oder Luft angrenzt, einen unterschiedlichen Brechungsindex aufweist und deshalb auch Licht unterschiedlich nach außen abgibt.

Eine weitere bevorzugte Ausführungsform des Lichtleiters besteht darin, daß die Oberfläche des Lichtleiters mechanische Strukturen aufweist, der in Abhängigkeit davon, ob Flüssigkeit oder Luft angrenzt, ein unterschiedliches Reflexionsverhalten an der Innenseite des Lichtleiters aufweist. Auf diese Weise wird im Bereich der Flüssigkeit das im Lichtleiter geführte Licht mit unterschiedlichen Wirkungsgrad geführt, so daß von Außen ein Unterschied in der Helligkeit zwischen dem Bereich, in dem Flüssigkeit am Lichtleiter angrenzt und dem Bereich, in dem Luft am Lichtleiter angrenzt, erkennbar ist.

Die Erfindung wird im folgenden anhand der Figuren näher erläutert; es zeigen:
- Fig. 1: ein Anzeigemittel in Form eines Rohres und
- Fig. 2: ein Anzeigemittel in Form eines Lichtleiters.

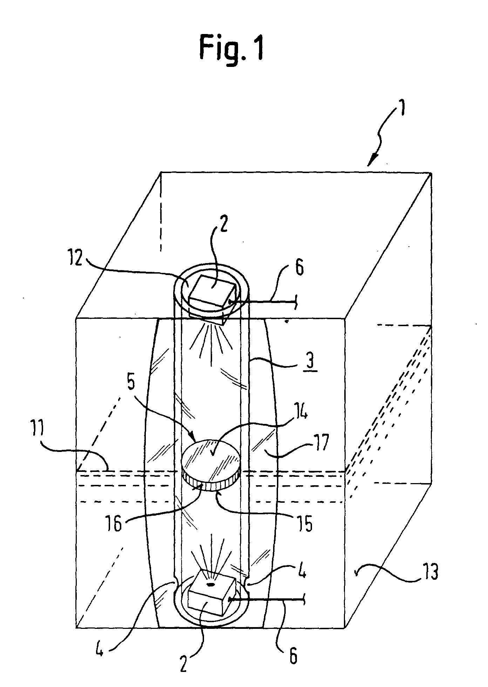

Fig. 1 zeigt schematisch einen Flüssigkeitsbehälter 1. Der Flüssigkeitsbehälter 1 kann beispielsweise in einer Kaffeemaschine oder einem Wassererhitzer eingebaut sein. Im Flüssigkeitsbehälter 1 ist ein Rohr 3 angeordnet, das von einer Bodenfläche 13 bis zu dem oberen Rand des Flüssigkeitsbehälters 1 geführt ist. Das Rohr 3 besteht aus einem durchsichtigen, lichtdurchlässigen Material.

Das Rohr 3 weist im Bereich der Bodenfläche 13 Öffnungen 4 auf, über die Flüssigkeit in einen Innenkanal 12 fliesen kann. Das Rohr 3 ist im wesentlichen als zylinderförmige Hülse mit einem Innenkanal 12 aufgebaut. Der Querschnitt des Rohres 3 ist in dem dargestellten Ausführungsbeispiel zylinderförmig, kann jedoch je nach Ausführungsform auch rechteckig sein oder andere Querschnitte aufweisen. Das Rohr 3 ist beispielsweise aus durchsichtigem Plexiglas oder Kunststoff gefertigt.

In einer ersten Ausführungsform ist eine Lichtquelle 2 entweder im Bereich der Bodenfläche 13 im Rohr 3 angeordnet oder zumindest im Bereich der Bodenfläche 13 an den Innenkanal 12 optisch angekoppelt. In dieser Ausführung kann die Lichtquelle 2 auch entfernt vom Rohr 3 angeordnet sein und über Kopplungsleitungen optisch an den Innenkanal 12 gekoppelt sein. Die Lichtquelle 2 weist elektrische Leitungen 6 auf, die zu einer Stromversorgung geführt sind. Die Lichtquelle 2 ist beispielsweise als Leuchtdiode oder Glimmlampe ausgeführt. Die Lichtquelle 2 ist in der Weise angeordnet, daß das von der Lichtquelle 2 abgegebene Licht im Innenkanal 12 nach oben abgestrahlt wird. Das von der Lichtquelle 2 abgegebene Licht wird von der Flüssigkeit, die sich im Innenkanal 12 befindet nach oben geführt. Das Rohr 3 begrenzt das Licht in der Ausbreitung und führt das Licht im Innenkanal 12 nach oben. An der Grenzfläche zwischen Flüssigkeit und Luft wird ein Teil des im Innenkanals 12 geführten Lichtes seitlich nach außen reflektiert, so daß im Bereich der Grenzfläche ein optischer Effekt auftritt, der von außen über ein Schauglas 17 gut erkennbar ist. Das Schauglas 17 ist im Bereich des Rohres 3 in die Wand des Flüssigkeitsbehälters 1 eingebracht.

In einer zweiten Ausführungsform ist zusätzlich ein Schwimmkörper 5 im Innenkanal 12 angeordnet, der auf der Flüssigkeit 11 schwimmt. Der Schwimmkörper 5 ist in der Weise ausgebildet, daß das Licht, das auf den Schwimmkörper 5 auftrifft, beeinflusst wird, so daß ein optischer Effekt im Bereich des Schwimmkörpers 5 auftritt. Der optische Effekt kann beispielsweise darin liegen, daß das Licht vom Schwimmkörper 5 in seiner Ausbreitung gestoppt wird und deshalb von außen Licht im Rohr 3 nur unterhalb des Schwimmkörper sichtbar ist.

In einer weiteren Ausführungsform ist der Schwimmkörper 5 von der Unterseite her lichtdurchlässig ausgebildet und beispielsweise auf der Oberseite verspiegelt. Auf diese Weise wird erreicht, daß Licht von unten in den Schwimmkörper 5 eintritt und an der verspiegelten Oberseite 14 reflektiert wird, so daß durch weitere Reflexionen im Schwimmkörper 5 ein großer Anteil des Lichtes über den Seitenrand 16 nach außen abgegeben wird. Auf diese Weise ist der Seitenrand 16 des Schwimmkörpers 5 hell erleuchtet.

Der Schwimmkörper 5 kann jedoch auch aus einem stark lichtstreuenden Material hergestellt sein, so daß auch ohne verspiegelter Oberseite 14 ein Großteil des über die Unterseite 15 aufgenommenen Lichtes seitlich über den Seitenrand 16 abgegeben wird. Weiterhin kann der Schwimmkörper aus einem lichtsammelnden Material hergestellt sein, das Licht auf einer Seite aufnimmt und in einer vorgegebenen Richtung wieder gebündelt abgibt.

Eine dritte Ausführungsform besteht darin, eine Lichtquelle 2 im oberen Bereich des Rohres 3 anzuordnen, so daß das von der Lichtquelle 2 abgegebenen Licht im Innenkanal 12 nach unten abgestrahlt wird. Aufgrund der Reflexionseigenschaften der Oberfläche der Flüssigkeit treten im Bereich der Flüssigkeitsoberfläche Reflexionen und Spiegelungen auf, die von aussen deutlich erkennbar sind. Auf diese Weise ist auch in dieser Ausführungsform der Füllstand durch einen optischen Effekt deutlich erkennbar. Jedoch kann auch, wie in dem zweiten Ausführungsbeispiel, ein Schwimmkörper 5 entsprechend den verschiedenen Ausführungsformen vorgesehen sein, der die Reflexion und/oder Streuung des Lichtes im Bereich der Flüssigkeitsoberfläche unterstützt.

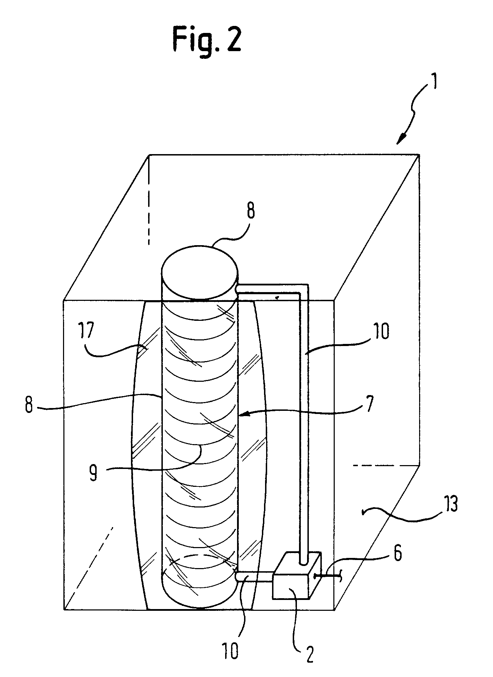

Figur 2 zeigt eine vierte Ausführungsform, bei der das Anzeigemittel in Form eines Lichtleiters 7 ausgebildet ist. Der Lichtleiter 7 ist von der Bodenfläche 13 bis zu einem oberen Bereich des Flüssigkeitsbehälters 1 geführt, und weist im wesentlichen eine Zylinderform auf. Der Lichtleiter 7 ist an einer Lichtquelle 2 angeschlossen, die entweder direkt mit dem Lichtleiter 7 in Verbindung steht, oder die über einen Kopplungsleiter 10 optisch an den Lichtleiter 7 angekoppelt ist. Die Anordnung der Lichtquelle 2 bzw. die Ankopplung der Lichtquelle 2 ist vorzugsweise im oberen/unteren Ende des Lichtleiters 7. Der Lichtleiter 7 weist eine Außenfläche auf, die in Abhängigkeit davon, ob Flüssigkeit an die Außenfläche angrenzt oder nicht, ein unterschiedliches Reflexionsverhalten in Bezug auf das im Lichtleiter 7 geführte Licht aufweist. Das bedeutet, daß das von der Lichtquelle 2 in den Lichtleiter 7 eingespeiste Licht in dem Bereich, in dem Flüssigkeit am Lichtleiter 7 anliegt, stärker nach außen abgegeben wird. Auf diese Weise ist die Grenzfläche, die von der Flüssigkeitsoberfläche und der Luft gebildet ist, deutlich als optischer Effekt erkennbar, da der Lichtleiter 7 im Bereich der Flüssigkeit 11 heller leuchtet.

In einer bevorzugten Ausführungsform wird das unterschiedliche Reflexionsverhalten des Lichtleiters 7 dadurch erhöht, daß eine Beschichtung 8 auf die Oberfläche des Lichtleiters 7 aufgebracht ist, die eine starke Änderung des Reflexionsverhaltens in Abhängigkeit davon, ob Flüssigkeit oder Luft an die Beschichtung anliegt, aufweist.

Eine weitere Ausführungsform des Lichtleiters 7 besteht darin, daß die Außenfläche des Lichtleiters mechanische Strukturen aufweist, die das unterschiedliche Reflexionsverhalten beim Übergang des Lichtleiters 7 von Flüssigkeit zu Luft zusätzlich hervorhebt. Im einfachsten Fall sind diese mechanischen Strukturen Querrillen, die in den Lichtleiter 7 eingebracht sind. In einer einfachen Ausführungsform reicht es aus, wenn die mechanischen Strukturen 9 in dem Bereich des Lichtleiters 7 angeordnet sind, der einem Schauglas zugeordnet ist. Ein Schauglas 17 ist in der Behälterwand des Flüssigkeitsbehälters 1 im Bereich des Lichtleiters 7 bzw. des Rohres 3 angeordnet. Auf diese Weise ist die Behälterwand in diesem Bereich durchsichtig ausgebildet. Die Füllstandsanzeige wird vorzugsweise bei Kaffeemaschinen oder Wasserkochern eingesetzt.

### Bezugszeichenliste

- 1: Flüssigkeitsbehälter
- 2: Lichtquelle
- 3: Rohr
- 4: Öffnung
- 5: Schwimmkörper
- 6: elektrische Leitung
- 7: Lichtleiter
- 8: Beschichtung
- 9: Struktur
- 10: Kopplungsleitung
- 11: Flüssigkeit
- 12: Innenkanal
- 13: Bodenfläche
- 14: Oberseite
- 15: Unterseite
- 16: Seitenrand
- 17: Schauglas

## Patentansprüche

1. Füllstandsanzeige für ein Medium, insbesondere Flüssigkeit, mit einem lichtdurchlässigen Anzeigemittel, wobei das Anzeigemittel in Abhängigkeit davon, welches Medium an das Anzeigemittel angrenzt unterschiedliche optische Eigenschaften aufweist, so daß im Grenzbereich zwischen zwei Medien ein optischer Effekt auftritt, der den Füllstand eines Mediums anzeigt, **dadurch gekennzeichnet, daß** eine Lichtquelle (2) vorgesehen ist, die an das Anzeigemittel (7, 3, 12) angeschlossen ist.

2. Füllstandsanzeige nach Anspruch 1, **dadurch gekennzeichnet, daß** das Anzeigemittel als Rohr (3) mit einem Innenkanal (12) ausgebildet ist, daß das Rohr (3) lichtdurchlässig ist, daß das Rohr (3) mindestens teilweise seitlich geöffnet ist, und daß die Lichtquelle (2) an den Innenkanal (12) angeschlossen ist.

3. Füllstandsanzeige nach Anspruch 2, **dadurch gekennzeichnet, daß** das Rohr (3) aus Plexiglas oder einem durchsichtigen Kunststoff gebildet ist.

4. Füllstandsanzeige nach einem der Ansprüche 2 oder 3, **dadurch gekennzeichnet, daß** im Innenkanal (12) ein Schwimmkörper (5) angeordnet ist, daß der Schwimmkörper (5) die Ausbreitung des Lichtes im Innenkanal (12) beeinflusst.

5. Füllstandsanzeige nach einem der Ansprüche 2 bis 4, **dadurch gekennzeichnet, daß** der Schwimmkörper (5) auf der Unter- bzw. Oberseite (15, 14) lichtdurchlässig ist, und daß der Schwimmkörper (5) Licht, das von der Unter- oder Oberseite (15, 14) aufgenommen wird, seitlich nach außen mindestens teilweise abgibt.

6. Füllstandsanzeige nach Anspruch 1, **dadurch gekennzeichnet, daß** das Anzeigemittel als Lichtleiter (7) ausgebildet ist.

7. Füllstandsanzeige nach Anspruch 6, **dadurch gekennzeichnet, daß** die Oberfläche des Lichtleiters (7) eine Beschichtung (8) aufweist, die unterschiedliche Brechungsindizes in Bezug auf das im Lichtleiter (7) geführte Licht aufweist, in Abhängigkeit von dem Medium, das an die Beschichtung (8) angrenzt.

8. Füllstandsanzeige nach Anspruch 6, **dadurch gekennzeichnet, daß** die Oberfläche des Lichtleiters (7) eine mechanische Struktur (9) aufweist, die unterschiedliche Brechungsindizes in Bezug auf das im Lichtleiter (7) geführte Licht aufweist, in Abhängigkeit von dem Medium, das an die Struktur (9) angrenzt.

9. Elektrisches Haushaltsgerät mit einer Füllstandsanzeige nach einem der vorhergehenden Ansprüche.
